**Europäisches Patentamt**

(19) **European Patent Office**

**Office européen des brevets**

(11) **EP 0 986 795 B1**

(12) **EUROPÄISCHE PATENTSCHRIFT**

(45) Veröffentlichungstag und Bekanntmachung des Hinweises auf die Patenterteilung:
**08.01.2003 Patentblatt 2003/02**

(51) Int Cl.7: **G06K 19/16**

(21) Anmeldenummer: **98929414.5**

(86) Internationale Anmeldenummer:
**PCT/EP98/03302**

(22) Anmeldetag: **03.06.1998**

(87) Internationale Veröffentlichungsnummer:
**WO 98/055963 (10.12.1998 Gazette 1998/49)**

(54) **VORRICHTUNG ZUM ERKENNEN BEUGUNGSOPTISCHER MARKIERUNGEN**

DEVICE FOR RECOGNIZING DIFFRACTION OPTICAL MARKINGS

DISPOSITIF POUR LA RECONNAISSANCE DE MARQUES OPTIQUES DE DIFFRACTION

(84) Benannte Vertragsstaaten:
**AT CH DE ES FI FR GB IT LI NL PT SE**

(30) Priorität: **06.06.1997 CH 136797**

(43) Veröffentlichungstag der Anmeldung:
**22.03.2000 Patentblatt 2000/12**

(73) Patentinhaber: **OVD Kinegram AG**
**6301 Zug (CH)**

(72) Erfinder:
• **STAUB, René**
**CH-6330 Cham (CH)**

• **TOMPKIN, Wayne, Robert**
**CH-5400 Baden (CH)**

(74) Vertreter:
**LOUIS, PÖHLAU, LOHRENTZ & SEGETH**
**Postfach 3055**
**90014 Nürnberg (DE)**

(56) Entgegenhaltungen:
**EP-A- 0 533 448**     **EP-A- 0 590 826**
**EP-A- 0 718 834**     **WO-A-92/22039**
**CH-A- 653 162**     **GB-A- 2 128 549**

## Beschreibung

Die Erfindung bezieht sich auf eine Vorrichtung zum maschinellen Erkennen beugungsoptischer Markierungen der im Oberbegriff der Patentansprüche 1 und 4 genannten Art.

Solche Vorrichtungen zum maschinellen Erkennen beugungsoptischer Markierungen eignen sich zur Ueberprüfung der Echtheit von Dokumenten, Wertzeichen, Banknoten, Ausweispapiere, Pässe und dergleichen, die ein Sicherheitsmerkmal aufweisen, das entsprechende beugungsoptische Markierungen enthält.

In der DE-OS 23 52 366 ist die grundlegende Anordnung einer Leseeinrichtung für eine transparente Sicherheitsstruktur unter Ausnutzung der Fouriertransformation durch eine entsprechende optische Anordnung mit einer Linse dargestellt. Paralleles, senkrecht auf eine makroskopische, mit Prismen realisierte Sicherheitsstruktur einfallendes Licht wird durch Brechung abgelenkt. Identische Prismen gleicher azimutaler Orientierung lenken das Licht als parallele Bündel ab und die Bindel werden durch die optische Anordnung auf einen Punkt in der Fokalebene der optischen Anordnung fokussiert. Die Verteilung der Lichtintensitäten in der Fokalebene bilden das Erkennungsmerkmal.

Die aus der DE-OS 25 38 875 bekannte Leseeinrichtung nutzt die Fouriertransformation aus, um durch Einstrahlen von Licht eine vorbestimmte Reliefstruktur eines gleichförmigen Beugungsgitters zu erkennen. Die Leseeinrichtung vergleicht die Intensitäten der in verschieden hohen Beugungsordnungen abgelenkten Lichtstrahlen und kann so auf die Querschnittsform des im Beugungsgitter verwendeten Reliefs schliessen. Eine Erhöhung der Sicherheit in Bezug auf die Erkennung der Echtheit erfolgt durch sequentielles Lesen aufeinanderfolgender Beugungsgitter oder mit Hilfe mehrerer Leseeinrichtungen, die parallel an verschiedenen, vorbestimmten Orten auf dem Substrat angebrachte Beugungsgitter untersuchen.

Die CH-PS 653'160 beschreibt eine Weiterbildung der in der DE-OS 25 38 875 gezeigten Leseeinrichtung für ein Echtheitsmerkmal, das mehrere, gleichzeitig beleuchtete Teilbereiche mit unterschiedlichen Beugungsstrukturen als Kodierung umfasst. Das an den Beugungsstrukturen gebeugte Licht wird durch ein optisches Mittel in dessen Fokalebene fokussiert. In der Fokalebene sind die Orte hoher Lichtintensität nur durch die Parameter, wie Spatialfrequenz, Azimut etc., der verschiedenen Beugungsstrukturen bestimmt. Fallen diese Orte mit denen von vorbestimmt angeordneten Lichtempfangern zusammen, wird das Echtheitsmerkmal als solches erkannt.

Die US-PS 4'034'211 und US-PS 4'023'010 beschreiben eine weitere Leseeinrichtung zum sequentiellen optischen Abtasten einer Datenspur aus aufeinanderfolgenden gleich grossen Beugungsgittern mit einem dünnen, nur einen Teil des Beugungsgitters beleuchtenden Lichtstrahl. Die Schriften weisen auf die in der Praxis möglichen Fehler beim optischen Abtasten hin, wie z.B. ein Verkippen der Ebene des Beugungsgitters zur Leseebene und ein grösserer bzw. kleinerer Abstand der Ebene des Beugungsgitters zur Leseebene. Die Auswirkungen von Abstandsfehlern eliminiert die bekannte optische Anordnung zur Fouriertransformation.

Die EP-0 718 834 A2 beschreibt einen optischen Datenträger mit hoher Aufzeichnungsdichte (Bits/cm$^2$) und ein Lesegerät zum sicheren Ablesen der auf dem Datenträger enthaltenen sequentiellen Folgen von Informationsmustern, die aus mehreren Beugungsgittern zusammengesetzt sind.

Das aus der EP 0 533 448 A2 bekannte Lesegerät weist symmetrische um den Lesestrahl angeordnete, grossflächige Photodetektoren auf, deren lichtempfindliche Flächen die Sektoren eines Kreisringes oder von zwei konzentrischen Kreisringen bedecken. Das Lesegerät erkennt auf einem Datenträger enthaltene sequentielle Folgen von Informationsmustern, die aus mehreren Beugungsgittern zusammengesetzt sind.

Alle diese Lesegeräte benötigen eine exakte Führung des Datenträgers unter genauer Einhaltung des Abstands und eine genaue Ausrichtung der Beugungsmuster auf dem Datenträger, um das Ablesen des Beugungsmusters überhaupt zu ermöglichen. Eine einfache Täuschung des Lesegerätes mittels geeignet angeordneten Spiegel- oder Prismenflächen kann bei den vorbekannten Lesegeräten nicht ausgeschlossen werden.

Die Leseeinrichtung nach CH-PS 653'162 schliesst eine solche Täuschung aus, indem die Aenderung des Beugungswinkels bei einer periodischen Aenderung der Wellenlänge des Lichts zum Bestrahlen der Beugungsgitters festgestellt wird.

Ein sehr schwer kopierbares Sicherheitsmerkmal und dessen Herstellung aus Flächenelementen mit reflektierenden Beugungsgittern beschreiben die EP-105'099, EP-169'326 und die US-PS 5'032'003. Die Beugungsgitter werfen einfallendes Weisslicht in Farben aufgespalten in die verschiedenen Beugungsordnungen unter bestimmten Azimutwinkeln zurück, wobei die Gitterparameter des Beugungsgitter wie Profilform, Spatialfrequenz und Azimutrichtung massgeblich für das Beugungsverhalten sind. Die Verwendung von asymmetrischen Profilformen zum unauffälligen Einbau einer maschinenlesbaren Information in das Muster solcher Sicherheitselemente lehren die EP-360'969 A1 und die EP-366'858 A1. in denen auch schematische Ausführungsbeispiele von Lesegeräten gezeigt sind, die eine Asymmetrie der Profilformen erkennen können.

Der Erfindung liegt die Aufgabe zugrunde, ein kostengünstiges, einfaches optisches Lesegerät fiir einen Datenträger mit einem optisch diffraktiven Sicherheitsmerkmal zu schaffen, dessen optische Merkmale gleichzeitig und ohne grosse Anforderungen an die Ausrichtung des Datenträgers maschinell ausgelesen werden können.

Die genannte Aufgabe wird erfindungsgemäss gelöst durch die Merkmale der Ansprüche 1 und 4. Vorteilhafte Ausgestaltungen ergeben sich aus den abhängigen Ansprüchen.

Nachfolgend werden Ausführungsbeispiele der Erfindung anhand der Zeichnungen näher erläutert.

Es zeigen

Figur 1: ein Lesegerät im Querschnitt,

Figur 2: ein Auswerteschema,

Figur 3: Dokument mit einem Sicherheitsmerkmal,

Figur 4: ein Lichtmuster in einer Fokalebene,

Figur 5 eine Lichtquelle;

Figur 6 eine Einrichtung zur Unterdrückung von Fremdlicht

Figur 7 das Lesegerät mit einer anderen Anordnung von Photodetektoren und

Figur 8 das Lesegerät mit schiefer Beleuchtung.

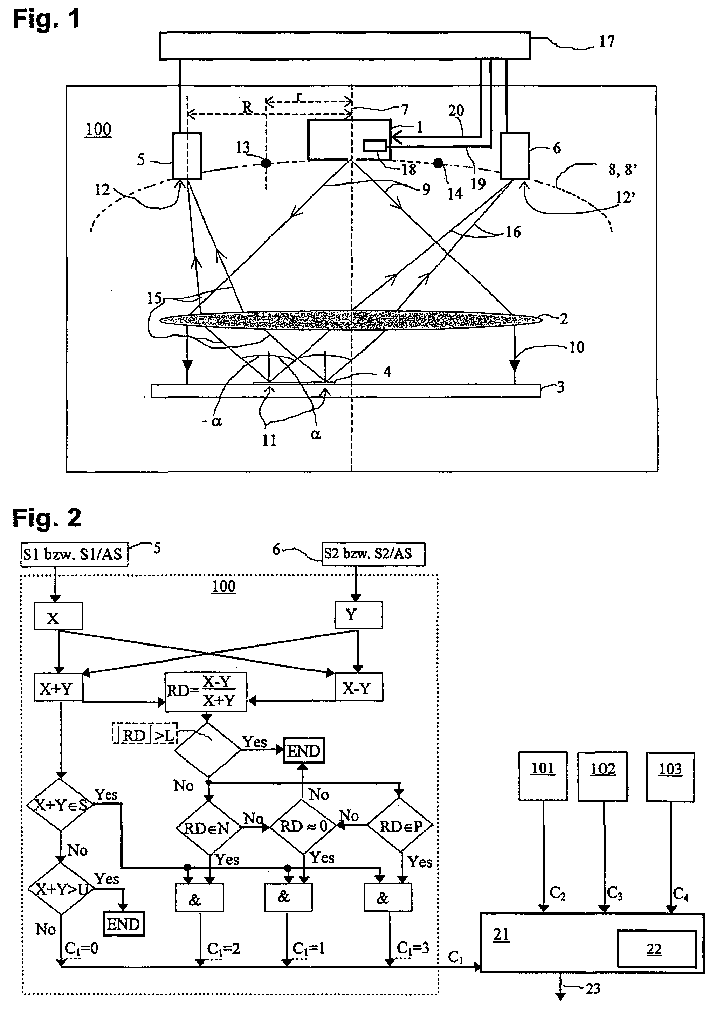

In der Figur 1 bedeuten 1 eine Lichtquelle, 2 ein optisches Sammelelement, 3 ein Dokument, 4 ein Sicherheitselement, 5 bzw. 6 ein in der Zeichnung der Figur 1 links bzw: rechts von der optischen Achse 7 des Sammelelements 2 dargestellter Photodetektor und 8 die Schnittlinie der einen, der Lichtquelle 1 zugewandten Fokalfläche 8' des Sammelelements 2 mit einer gedachten, nur zum Zwecke der besseren Beschreibung dargestellten Beugungsebene 100, die durch ein aus den Photodetektoren 5 und 6 gebildetes Photodetektorpaar sowie durch die optische Achse 7 festgelegt ist. Die beiden Photodetektoren 5 und 6 sind symmetrisch zur optischen Achse 7 angeordnet und weisen daher den gleichen Abstand R zur optischen Achse 7 auf. Als Sammelelement 2 sind Linsen, Hohlspiegel, Hologramme, Beugungsgitter usw. verwendbar. Die Fokalfläche 8' ist infolge von Abbildungsfehlern des Sammelelements 2 keine Ebene sondern eine gekrümmte Fläche, die mit der Beugungsebene 100 eine gekrümmte Schnittlinie 8 gemeinsam hat.

In der Lichtquelle 1 erzeugt beispielsweise ein Laser, eine Laserdiode, eine Lcuchtdiode (LED) oder eine Glühlampe mit einem Farbfilter eine fast monochromatische Strahlung mit einer vorbestimmten Wellenlänge $\lambda$ aus dem infraroten und/oder sichtbaren Spektrum. Eine hier nicht gezeigte Ausgangsoptik der Lichtquelle 1 fokussiert die Strahlung der Lichtquelle 1 auf die Fokalfläche des Sammelelements 2, so dass die Strahlung zu einem Strahlenkegel 9 aufgefächert wird, dessen Spitze auf der Schnittlinie 8 liegt und der die wirksame Apertur des Sammelelements 2 grossflächig beleuchtet. Das Sammelelement 2 erzeugt aus der kegelförmig einfallenden Strahlung ein durch die wirksame Apertur des Sammelelements 2 begrenztes paralleles Strahlenbündel 10. Das Strahlenbündel 10 ist zur verlängerten Achse des Strahlenkegels 9 parallel und beleuchtet statisch einen Teil des Dokuments 3 und das darauf angebrachte Sicherheitselement 4. Mit Vorteil wird eine grosse Apertur des Sammelelements 2 gewählt, da von ihr der Durchmesser des Strahlenbündels 10 abhängt und somit geringere Anforderungen an die Ausrichtung des Sicherheitselements 4 bzw. des Dokuments 3 im Strahlenbündel 10 gestellt werden. Die Achse des Strahlenkegels 9 muss nicht, wie hier der Einfachheit halber in der Zeichnung der Figur 1 dargestellt ist, mit der optischen Achse 7 zusammenfallen.

Das Sicherheitselement 4 ist typisch ein auf das Dokument 3 aufgeklebtes Laminat aus Kunststoffen mit einer Vielzahl von eingebetteten Flächenelementen mit reflektierenden Beugungsstrukturen, von denen einige oder alle als beugungsoptisch wirksame Markierungen 11 mit einer vom Lesegerät erkennbaren Information dienen. Die Flächenelemente bilden eines der aus den eingangs erwähnten Schriften bekannten Muster, das durch eine transparente Deckschicht des Laminats hindurch auch visuell sichtbar ist. Eine mögliche Ausführung eines solchen Laminats ist aus der EP-401'466 bekannt. Eine Ausführung der optischen Markierungen 11 beschreibt die WO-A-9855964.

Das parallele Strahlenbündel 10 trifft senkrecht auf die zwei durch einen Pfeil gekennzeichneten Teilflächen mit beugungsoptisch wirksamen ersten Markierungen 11. Sie weisen gleiche Gitterparameter (Azimut $\varphi$, Profilform, Spatialfrequenz usw.) auf, wobei die Richtung des Azimuts $\varphi$ parallel zur Beugungsebene 100 liegt. Die Teilflächen sind auf verschiedene Orte in der Fläche des Sicherheitselements 4 verteilt und in dessen Muster integriert. Die Gesamtfläche mit der Markierung 11 wird vorzugsweise in mehrere Teilflächen aufgeteilt, damit die Markierung 11 gegen Beschädigungen der Deckschicht unempfindlich ist. Die ersten Markierungen 11 beugen beispielsweise für die Beugungsordnungen m = $\pm$1 das einfallende Licht mit der Wellenlänge $\lambda$ unter dem Beugungswinkel $\pm\alpha$ symmetrisch zum cinfallenden Strahlenbündel 10. Von jeder Teilfläche mit der Markierung 11 werden in der Beugungsebene 100 und unter den Beugungswinkel $\pm\alpha$ gebeugtes paralleles Licht zum Sammelelement 2 geworfen. Bekanntlich werden parallele Lichtstrahlen nach dem Durchgang durch das Sammelelement 2 auf der Fokalfläche 8' in einen einzigen Punkt 13 bzw. 14 fokussiert, dessen Abstand r von der optischen Achse 7 durch den Winkel zwischen den parallelen Lichtstrahlen und der optischen Achse 7 bestimmt ist. Das Sammelelement 2 erzeugt daher ein punktförmiges primäres Bild der Gesamtfläche aus dem unter dem Beugungswinkel -$\alpha$ gebeugten Licht 15 auf der Schnittlinie 8, wo eine für die Wandlung von Licht in elektrischen Strom wirksame Fläche 12 des Photodetektors 5 angeordnet ist. Das unter dem Beugungswinkel +$\alpha$ gebeugtes Licht 16 wird entsprechend auf eine wirksame Fläche 12' des Photodetektors 6 fokussiert.

Besitzen die weiteren Markierungen 11 eine andere Spatialfrequenz, erfolgt bei gleicher Beleuchtung die Beugung unter einem anderen Beugungswinkel, dessen Wert sich vom Betrag $\alpha$ unterscheidet, so dass das gebeugte Licht beispielsweise in die symmetrisch zur optischen Achse 7 gelegenen Punkte 13 und 14 fokussiert wird. Der Abstand r zur optischen Achse 7 ist vom Abstand R verschiedenen. Weist hingegen die Richtung des Azimuts $\varphi$ einer anderen optischen Markierung 11 aus der Ebene 100 heraus, liegen die beiden Brennpunkte für deren gebeugte Strahlung zwar auf der Fokalfläche 8', aber um den Azimut $\varphi$ aus der Beugungsebene 100 verdreht.

Das an allen beugungsoptisch wirksamen Flächenelementen des Sicherheitselementes 4, die Markierungen 11 eingeschlossen, gebeugte Licht wird unabhängig vom Ort der Teilflächen im Strahlenbündel 10 entsprechend der Wellenlänge $\lambda$ der Beleuchtung, dem Beugungswinkel und den Gitterparametern in der Fokalebene 8' vom Sammelelement 2 das primäre Bild erzeugt, wobei die beiden Brennpunkte der gleichen Beugungsordnung die Polarkoordinaten r, $\varphi$ und r, $\varphi$+180 aufweisen.

Der Ursprung des Koordinatensystems ist der Durchstosspunkt der optischen Achse 7 bzw. das Licht der nullten Beugungsordnung mit der Fokalebene 8'. Die wirksame Fläche 12, 12' der beiden Photodetektoren 5, 6 bestimmen Raumwinkel der Akzeptanz für das gebeugte Licht 15, 16. Die Zentren der Akzeptanzflächen weisen die Polarkoordinaten R, $\varphi$ und R, $\varphi$+180° auf und können demnach nur die in den Akzeptanzflächen gesammelte, an den Teilflächen der ersten Markierung 11 gebeugte Strahlung empfangen nicht jedoch gebeugtes Licht von den andern optischen Markierungen.

Die Photodetektoren 5 und 6 wandeln das auf ihre wirksame Fläche 12, 12' fallende gebeugte Licht 15 bzw. 16 in ein der Intensität des gebeugten Lichts 15 bzw. 16 proportionales elektrisches Signal um. Das Signal S des Photodetektors 5 bzw. S2 des Photodetektors 6 wird über eine Leitung einer Auswerteeinheit 17 zugeführt. Die Auswerteeinheit 17 bildet aus den beiden elektrischen Signalen S 1 und S2 wenigstens die relative Differenz RD = (S1 - S2): (S1 + S2).

Ist das Signal RD von Null verschieden, weisen die Markierungen 11 ein asymetrisches Gitterprofil auf, wobei die Funktion sign(RD) die Richtung des Azimuts $\varphi$ in der Ebene 100 bezeichnet.

Mit Vorteil steuert die Auswerteeinheit 17 die Intensität der Lichtquelle 1, damit die Photodetektoren 5, 6 und die Lichtquelle 1 im optimalen Bereich arbeiten. Eine Photozelle 18 überwacht die Intensität der Lichtquelle 1, die einen festen Anteil des in der Lichtquelle 1 erzeugten Lichtstroms misst. Das der Auswerteeinheit 17 mittels einer Leitung 19 zugeführte Ausgangssignal AS der Photozellc 18 wird zur Steuerung des von der Lichtquelle 1 emittierten Lichtstroms herangezogen. Wird das Licht in einer Leuchtdiode (LED) erzeugt, erfolgt die Steuerung einfach über die der LED über eine Versorgungsleitung 20 zugeführte Stromstärke.

Die Teilflächen der vom Photodetektorpaar 5, 6 erkennbaren Markierungen 11 müssen eine vorbestimmte Mindestfläche aufweisen, damit die Photodetektoren 5, 6 ein genügend grosses elektrisches Ausgangssignal S1 bzw. S2 erzeugen. Das Ausgangssignal AS der Photozelle 18 kann mit Vorteil zur Normierung der Ausgangssignale S 1 und S2 der Photodetektoren 5 und 6 herangezogen werden, d.h. es werden die Verhältnisse S1/AS und S2/AS gebildet. Diese Signale S1/AS, S2/AS sind von der effektiven Stärke des Lichtstroms im Strahlenbündel 10 unabhängig, hängen aber von der Summe aller Teilflächen mit den gleichen Markierungen 11 und dem allgemeinen Zustand des Sicherheitselements 4 ab.

In der Figur 2 ist die Verarbeitung der Ausgangssignale X =S1 bzw. X=S1/AS und Y=S2 bzw. Y=S2/AS anhand der Beugungsebene 100 für ein Photodetektorpaar dargestellt. Die Auswerteeinheit 17 (Figur 1) prüft, ob die Summe der beiden Ausgangssignale, X+Y, sowie die relative Differenz, RD=(X-Y):(X+Y), in zugeordneten erlaubten Bereichen S, N und P liegen. Wenn das Summensignal X+Y Werte aus dem erlaubten Bereich S annimmt, weist die erste Markierung 11 (Figur 1) eine vorbestimmte minimale Gesamtfläche und symmetrische oder asymmetrische Reliefstrukturen mit den für die Photodetektoren 5, 6 der Beugungsebene 100 vorbestimmten Gitterparametern auf. Ist die relative Differenz RD negativ und liegt sie im erlaubten Bereich N, so ist die Reliefstruktur asymmetrisch, wobei der rechte Photodetektor 6 stärker als der linke Photodetektor 5 beleuchtet wird. Weist die relative Differenz RD positive Werte auf und liegen sie im erlaubten Bereich P, so ist die Reliefstruktur ebenfalls asymmetrisch, weist aber einen um 180° grösseren Azimut $\varphi$'= $\varphi$ + 180° auf. In diesem Fall ist die Lichtintensität am linken Photodetektor 5 grösser als die am rechten Photodetektor 6. Liegt hingegen die relative Differenz RD zwischen den Werten des Bereichs N und P, d.h. praktisch fast gleich Null, und ist das Summensignal X+Y aus dem erlaubten Bereich S, werden die beiden Photodetektoren 5 und 6 fast gleich stark bestrahlt, wie dies bei einer Beugung von Licht an einer symmetrischen Reliefstruktur der Fall ist.

Erreicht hingegen das Summensignal X+Y den unteren Grenzwert U des erlaubten Bereichs S nicht, empfangen die beiden Photodetektoren 5 und 6 nur geringe Lichtintensitäten. Die lichtbeugenden Reliefstrukturen mit den für die Photodetektoren 5, 6 der Beugungsebene 100 vorbestimmten Gitterparametern erreichen nicht die vorbestimmte minimale Gesamtfläche. Anstelle dieser Reliefstruktur kann beispielsweise auch eine Mattstruktur, eine ebene Spiegelfläche, deren Senkrechte parallel zum Strahlenbündel 10 ausgerichtet ist, eine Reliefstruktur mit andern Gitterparametern, eine drucktechnisch aufgebrachte Farbe usw. oder ein transparentes Fenster in der Reflexionsschicht des Laminats als optische Markierung 11 innerhalb des Sicherheitselements 4 (Figur 1) eingesetzt sein. Auch dieses Ergebnis "keine vorbestimmte Reliefstruktur" wird in der Auswerteeinheit 17 weiterverarbeitet.

Ueberschreitet hingegen das Summensignal X+Y den unteren Grenzwert U und ist das Summensignal X+Y dennoch ausserhalb des erlaubten Bereichs S oder ist der Betrag der relativen Differenz RD grösser als ein oberer Grenzwert L, ignoriert die Auswerteeinheit 17 die Signale X, Y und blockiert die weitere Auswertung, da einer oder beide der Photodetektoren 5 und 6 zu hohe Lichtintensitäten empfangen, wie sie bei Blendung durch passend geneigte Spiegelflächen auftreten können. Ist der Wert von RD zu weit vom Wert Null entfernt und stammt nicht aus den Bereichen N und P, wird die weitere Auswertung auch blockiert.

Die Anzahl der mit einer einzigen Beugungsebene 100 und einem einzigen Photodetektorpaar identifizierbaren optischen Markierungen 11 beträgt daher vier; eine symmetrische Reliefstruktur, zwei asymmetrische Reliefstrukturen und keine der vorbestimmten Reliefstrukturen. Das Ergebnis der Verarbeitung der Ausgangssignale X und Y für die Beugungsebene 100 wird in einer Ziffer $C_1$ kodiert, beispielsweise $C_1 = 0$ für keine der vorbestimmten Reliefstrukturen, $C_1 = 1$ für eine symmetrische Reliefstruktur und $C_1 = 2$ bzw. $C_1 = 3$ für eine der beiden asymmetrischen Reliefstrukturen.

Die Beugungsebene 100 kann ein zweites Photodetektorpaar in den Punkten 13 (Figur 1) und 14 (Figur 1) aufweisen und kann unabhängig von den andern Photodetektorpaaren zwischen vier Profiltypen der optischen Markierungen 11 unterscheiden. Die vorbestimmten Reliefstrukturen für die beiden Photodetektorpaare unterscheiden sich nur im Beugungswinkel.

Eine Kombination von mehreren Beugungsebenen 100, 101, 102, 103, usw., die identisch wie die Beugungsebene 100 zu beschreiben sind, ermöglicht gleichzeitig optische Markierungen 11 mit Q verschiedenen Gitterparametern zu erfassen. Die Kombination weist zusammen Q Photodetektorpaare auf. Diese Beugungsebenen 100, 101, 102, 103, usw. schneiden sich in der optischen Achse 7 und schliessen Schnittwinkel zwischen 10° und 90° ein, d.h. die gleichzeitig erkennbaren optischen Markierungen 11 unterscheiden sich wenigstens im Azimut $\varphi$. Deren Signale werden gleichzeitig erfasst und ausgewertet. Sie ergeben eine wirksame Basis für eine gleichzeitig maschinell auslesbare Information basierend auf den Ziffern $C_1$, $C_2$, $C_3$, $C_4$ usw. Eine Datenverarbeitungseinheit 21 bewertet das Ergebnis der Identifikation der optischen Markierungen 11, die für jedes der Q Photodetektorpaare gleichzeitig durchgeführt wird, mit der einem Photodetektorpaar q zugeordneten Ziffer $C_q$ und erzeugt damit eine Kennzahl

$$Z = C_Q \cdot 4^{Q-1} + ... + C_q \cdot 4^{q-1} + ... + C_3 \cdot 4^2 + C_2 \cdot 4^1 + C_1 \cdot 4^0. = \Sigma C_q \cdot 4^{q-1}$$

für q = 1 bis Q.

Für eine spezielle Anwendung zulässige Werte KS der Kennzahlen Z sind, wie übrigens auch die Werte für die zulässigen Bereiche S, P, und N sowie der Grenzwerte U und L, als Referenzwerte in einem Speicher 22 der Datenverarbeitungseinheit 21 abgelegt. Wenn die Kennzahl Z in der Menge der Werte KS enthalten ist, ist die Kennzahl Z eine zulässige, der Datenverarbeitungseinheit 21 bekannte Information bzw. Kodierung des Sicherheitselementes 4 (Figur 1). Mit Q =4 sind demnach 256 Kombinationen bzw. Sicherheitselemente 4 unterscheidbar. Die Datenverarbeitungseinheit 21 gibt das Ergebnis dieser Identifikation, wie z.B. Erkennen, Nichterkennen der Kodierung des Sicherheitselementes 4, über einen elektrischen Pfad 23 in geeigneter Form weiter, beispielsweise an eine visuelle Anzeige, an eine Sortier- oder Zählmaschine, usw.

Die asymmetrischen Beugungsstrukturen weisen entsprechend der Form ihres Profils bestimmte relative Differenzen RD auf, beispielsweise kann bei einem ersten Profil der Wert der relativen Differenz RD im ersten Bereich $0.3 < RD < 0.6$ und bei einem zweiten Profil im zweiten Bereich $0.7 < RD < 0.8$ liegen, wobei die Grenzen hier nur als Beispiel dienen, um zu zeigen, dass sich beide Bereiche nicht überlappen. Der Wert RD kann in diesem Fall aus der Menge $N_1$ oder $N_2$ bzw. $P_1$ oder $P_2$ stammen. Diese asymmetrischen Reliefstrukturen unterscheiden sich nicht nur im Vorzeichen des Werts RD sondern auch im absoluten Betrag $|RD|$. Der Umfang der Werte für die Ziffer C hängt daher von der Anzahl M der sicher mit dem absoluten Betrag $|RD|$ unterscheidbaren asymmetrischen Reliefstrukturen ab, wobei $C \in \{0, 1, ..., (2 \cdot M+1)\}$. Im obigen Beispiel mit M=2 können daher 6 mögliche Strukturen unterschieden werden. Können K Strukturen unterschieden werden und sind Q Photodetektorpaare angeordnet, berechnet sich die Kennzahl aus der Summe

$$Z = \Sigma C_q \bullet K^{q-1},$$

summiert über alle Werte q = 1 bis Q.

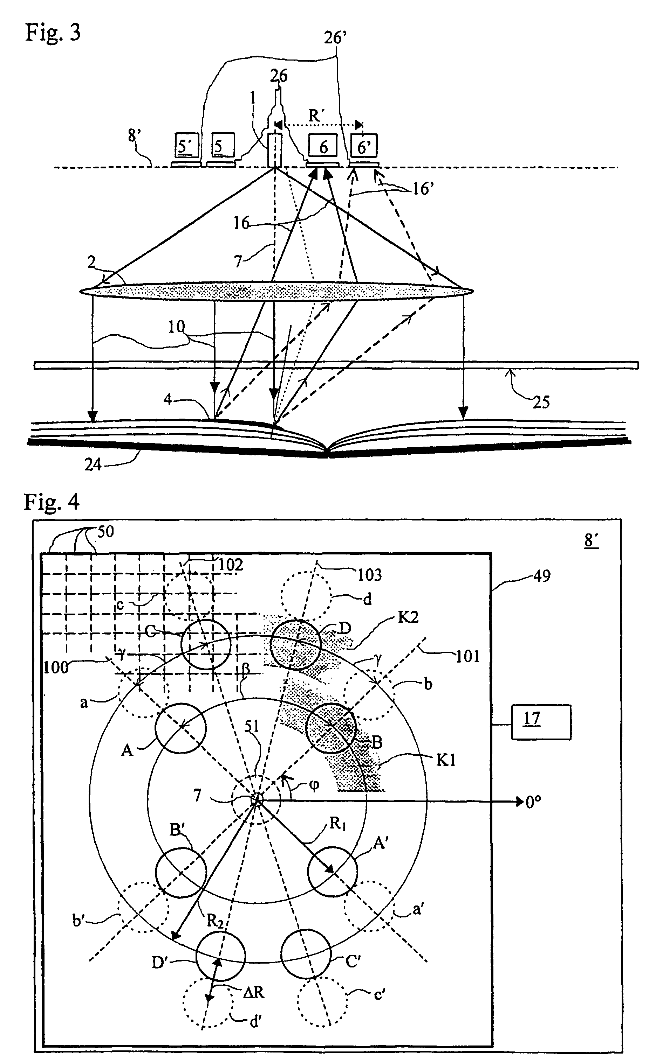

Sendet in der Figur 3 die Lichtquelle 1 ihre emittierte Strahlung mit einer periodisch wechselnden Wellenlänge $\lambda$ aus, wie dies in der eingangs erwähnten CH-PS 653' 162 beschrieben ist, so ändert sich der Wert des Beugungswinkels $\alpha$ (Figur 1) entsprechend. Beispielsweise ändert sich die Strahlung von Grün ($\lambda \approx 535$ nm) auf Rot ($\lambda \approx 656$ nm), dann vergrössert sich der Betrag des Beugungswinkels $\alpha$ und das gebeugte Licht 16' trifft statt auf den Photodetektor 6 wie das Licht 16 am Ort eines zweiten Photodetektors 6' ein, der weiter von der optischen Achse 7 entfernt ist als der Photodetektor 6, d.h. ein Abstand R' ist grösser als der Abstand R (Figur 1). In der Zeichnung der Figur 3 ist der Uebersichtlichkeit wegen die zur optischen Achse 7 symmetrische Beugung nicht eingezeichnet. Das gleiche gilt für die Photodetektoren 5; 5'und das unter dem Beugungswinkel -$\alpha$ abgelenkte Licht 15 (Figur 1). Die Auswerteeinheit 17 (Figur 1) bestimmt zunächst die Kennzahl $Z_1$ des Sicherheitselementes 4 bei der Beleuchtung mit Licht der Wellenlänge $\lambda_1$ und anschliessend die Kennzahl $Z_2$ mit Licht der Wellenlänge $\lambda_2$. Für eine positive Identifikation des Sicherheitselementes 4 muss bei zwei aufeinanderfolgenden Messungen jeweils die Kennzahl Z aus der für das verwendete Licht der Wellenlänge $\lambda_1$, $\lambda_2$ zugehörigen Menge der Werte KS stammen.

Das Dokument 3 (Figur 1) ist als aufgeschlagenes Heft 24 dargestellt, beispielsweise ist dies ein Passbuch 24 mit einem auf eines seiner Blätter geklebten Sicherheitselement 4. Als Folge der Heftung weisen die Blätter des Passbuchs 24 eine zur Heftung hin zunehmende Krümmung auf, der das Sicherheitselement 4 seiner geringen Dicke wegen folgt. Infolge der örtlich variierenden Krümmung der Oberfläche des Sicherheitselements 4 fallen die Strahlen des Strahlenbündels 10 mit einem von der Senkrechten abweichenden Winkel auf die Markierungen 11 (Figur 1) ein. In der Zeichnung der Figur 3 sind die Lichtwege für zwei gleiche Markierungen 11 eingezeichnet, deren gebeugte Strahlen wegen des unterschiedlichen Einfallswinkels nicht mehr parallel sondern divergent sind. Das gebeugte Licht 15 bzw. 16 bzw. 16' vereinigen sich daher nicht mehr in einem einzigen Punkt 13 (Figur 1), sondern treffen mit verschiedenen Abständen r (Figur 1) zur optischen Achse 7 auf die Fokalfläche 8' auf. Aehnliche Verhältnisse liegen bei zerknitterten Papierträgern vor, beispielsweise bei gebrauchten Banknoten, Wertschriften usw. Auch hier folgt das Sicherheitselement 4 lokal der Papieroberfläche, nur wird lokal das gebeugte Licht 16, 16' aus der entsprechenden Beugungsebene 100 abgelenkt. Um das an derart gekippten Markierungen 11 gebeugte Licht 15 bzw. 16 bzw. 16' sicher zu erfassen, weist die aktive Fläche 12 (Figur 1), 12' (Figur 1) der Photodetektoren 5; 5'; 6; 6' mit Vorteil eine vorbestimmte Ausdehnung sowohl in radialer als auch in azimutaler Richtung auf. Eine vorbestimmte azimutale Ausdehnung ermöglicht insbesondere auch das Auslesen der Markierungen 11, falls das Sicherheitselement 4 bzw. das Substrat 3, 24 im Azimut schlecht auf die Beugungsebenen 100, 101, 102, 103 usw. ausgerichtet ist. Da die aktiven Fläche 12, 12' der Photodetektoren 5, 6, 6' vorbestimmt und in der Grösse und Form nicht veränderbar sind, können mit Vorteil vor den aktiven Flächen 12, 12' der Photodetektoren 5, 5', 6. 6' angeordnete optische Mittel 26, 26' (Prismen, Linsen, Filter, Hologramme, Beugungsgitter usw.) das in einen vorbestimmten Raumwinkel gebeugte Licht 15, 16, 16' sammeln und auf die aktive Fläche 12, 12' lenken. Diese vorbestimmten Raumwinkel definieren auf der Fokalebene 8' Akzeptanzflächen der Photodetektoren 5, 6, 6'. Grösse und Form (Kreisringabschnitt, Kreis, Sektor, Rechteck usw.) sind dem Einsatzzweck anzupassen. In der Zeichnung der Figur 4 sind der Einfachheit wegen diese Akzeptanzflächen als Kreise A bis D, A' bis D' und a bis d, a' bis d' dargestellt.

Eine ebene transparente Platte, z.B. eine Glasplatte, mit planparallelen Oberflächen legt in der Figur 3 eine Leseebene 25 mit der dem Sammelelement 2 abgewandten Oberfläche fest. Die Glasplatte ermöglicht eine weitgehend ebene Auflage des zu prüfenden Dokumentes 3 und ein vorteilhaftes Glätten des Sicherheitselements 4, das eine bessere Fokussierung des gebeugten Lichts in den Akzeptanzflächen ergibt. Die Glasplatte schützt zudem den Innenraum der Vorrichtung mit den optischen Teilen vor Staub, Fingerabdrücken usw. Dies ist insbesondere wichtig, wenn die Vorrichtung auf den Kopf gestellt angeordnet ist und die Lichtquelle 1 das auf der Glasplatte liegende und derart geglättete Sicherheitselement 4 von unten beleuchtet. Es ist hier nochmals zu bemerken, dass die optische Achse 7 nicht senkrecht auf der Leseebene 25 stehen muss.

Die Figur 4 zeigt die Fokalebene 8' einer Ausführung der Vorrichtung mit vier Beugungsebenen 100, 101, 102 und 103, die sich in der optischen Achse 7 schneiden. In der Zeichnung der Figur 4 steht die optischen Achse 7 senkrecht auf der Zeichnungsebene, die immateriellen Beugungsebenen 100, 101, 102 und 103 sind durch ihre Schnittlinie mit der Fokalebene 8' und die Akzeptanzflächen A, A', B, B', C, C', D und D' der Photodetektorpaare als Kreisflächen dargestellt. Diese Kreisflächen stellen die Gebiete dar, in denen das gebeugte Licht 15 (Figur 1), 16 (Figur 2) von den in den entsprechenden Richtungen des Azimuts $\varphi$ bzw. $\varphi + 180°$ ausgerichteten, beugungsoptisch wirksamen Markierungen 11 (Figur 1) des Sicherheitselementes 4 (Figur 1) zu erwarten ist, falls das Sicherheitselement 4 in das Strahlenbündel 10 eintritt und die radiale Abstände $R_1$ und $R_2$ die durch die Spatialfrequenz bzw. Beugungswinkel und die Wellenlänge $\lambda$ des Strahlenbündels 10 vorbestimmten Werte aufweisen.

Die Tabelle 1 zeigt beispielhaft einen Satz von Parametern eine Anordnung nach der Figur 4 zum Auslesen mit rotem Licht ($\lambda = 670$ nm). Die Photodetektoren sind mit ihren Akzeptanzflächen A, A', B, B', C, C', D und D' identifiziert. Zwischen den Beugungsebenen 100 und 101, deren Photodetektorpaare A - A', B - B' den gleichem Abstand $R_1$ = 9,9 mm aufweisen, beträgt der Schnittwinkel $\beta$ = 90°, während zwischen den nächsten Beugungsebenen 100 und 102 bzw. 103 und 101 mit den Abständen, $R_1$ = 9,9 mm für das Photodetektorpaar A, A' bzw. B, B' und $R_2$ = 16,6 mm für die Photodetektoren C, C' bzw. D, D' beträgt der jeweilige Schnittwinkel $\gamma$ = 30°. Somit ergibt sich ein Zwischenwinkel bei den Beugungsebenen 102 und 103 von $\alpha - 2\gamma$ = 30°.

Als Sammelelement 2 (Figur 3) ist ein Achromat Nr. 322284 von Spindler & Hoyer mit einer nominellen Brennweite von 25 mm angeordnet. Wegen der relativ kleinen Apertur des Achromats beträgt der Abstand zwischen der Leseebene 25 (Figur 3) und dem Sammelelement 2 (Figur 3) etwa 3 mm.

Tabelle 1:

| Beugungsebene (Bezugszahl) | Photodetektor | Abstand R (mm) | Spatialfrequenz (Linien/mm) | Azimut $\varphi$ [°] |
|---|---|---|---|---|
| 100 | A | $R_1$=9,9 | 638 | 135 |
|  | A' | $R_1$= 9,9 | 638 | 315 |
| 101 | B | $R_1$= 9,9 | 638 | 45 |
|  | B' | $R_1$=9,9 | 638 | 225 |
| 102 | C | $R_2$= 16,6 | 986 | 105 |
|  | C' | $R_2$= 16,6 | 986 | 285 |
| 103 | D | $R_2$= 16,6 | 986 | 75 |
|  | D' | R2= 16,6 | 986 | 255 |

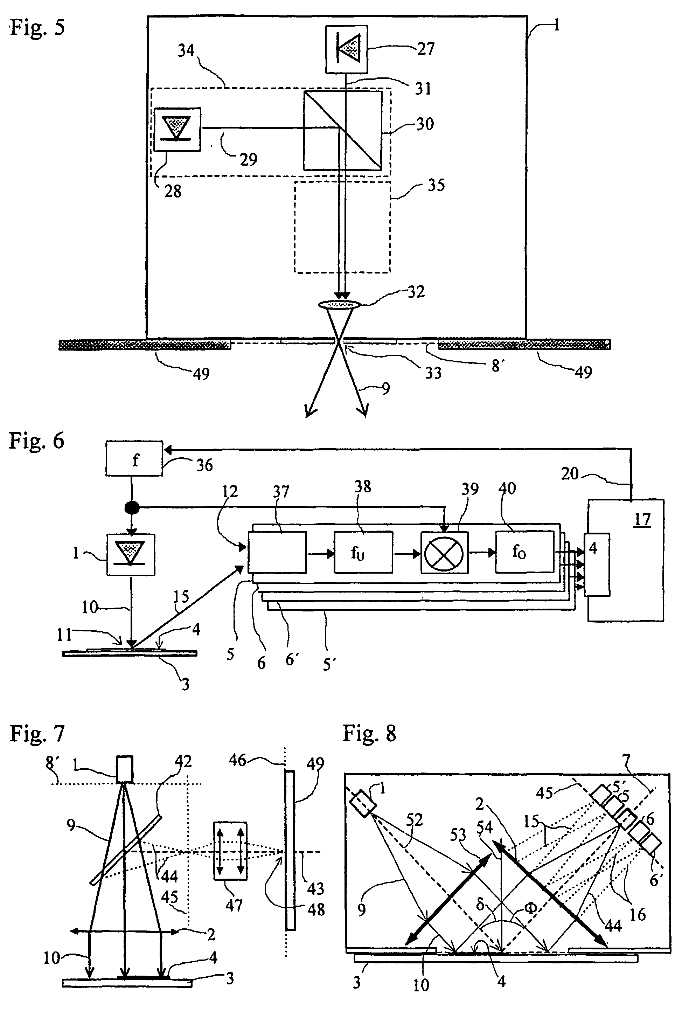

In einer Ausführung weist in der Figur 5 die Lichtquelle 1 neben einer Strahlenquelle 27 für Licht mit der Wellenlänge $\lambda_1$ zusätzlich eine Laserdiode 28, die ein paralleles Lichtbündel 29 mit einer grösseren Wellenlänge $\lambda_2$ erzeugt. Ein Strahlkoppler 30 (z.B. Doppelprisma, halbdurchlässiger Spiegel usw.) lenkt das Lichtbündel 29 parallel zur Strahlung 31 der Strahlenquelle 27 ab. Das Lichtbündel 29 und die Strahlung 31 werden durch eine Linse 32 fokussiert, wobei der Fokus als Austrittspupille 33 in der Fokalebene 8' liegt und die Spitze des Strahlenkegels 9 bildet. Beispielsweise werden die optischen Markierungen 11 (Figur 1) durch die Lichtquelle 1 in aufeinanderfolgenden Messungen mit einer der beiden Wellenlängen $\lambda_1$ bzw. $\lambda_2$ (monochrom) abwechslungsweise oder polychrom mit beiden Wellenlängen $\lambda_1$ und $\lambda_2$ gleichzeitig beleuchtet. Wechselt die Wellenlänge $\lambda$ der Beleuchtung der Markierungen 11 von $\lambda_1$ zur grösseren Wellenlänge $\lambda_2$, ist der Betrag der Beugungswinkel grösser und das gebeugte Licht 16 (Figur 3) verlagert sich in der Figur 4 um $\Delta R$ von den Akzeptanzflächen der Photodetektorpaare A - A', B - B', C - C' bzw. D - D als gebeugtes Licht 16' (Figur 3) zu den punktiert umrandeten Akzeptanzflächen der Photodetektorpaare a - a', b - b', c - c' bzw. d - d'. Die Kennzahlen $Z_1$, $Z_2$ ermitteln sich aus den Ausgangssignalen X und Y von jedem der acht Photodetektorpaare (Q = 8), wobei bei der Beleuchtung mit der Wellenlänge $\lambda_1$ die Kennzahl $Z_1$ und mit der Wellenlänge $\lambda_2$ die Kennzahl Z2 berechnet wird. Bei der polychromer Beleuchtung des Sicherheitselements 4 (Figur 3) können in den Akzeptanzflächen beider Photodetektorpaare, z.B. A - A', a - a' usw., der gleichen Beugungsebene 100, 101, 102 bzw. 103 gebeugtes Licht erwartet werden. In diesem Fall wird nur eine einzige Kennzahl Z mit Q = 8 ermittelt. Unter Umständen kann es von Vorteil sein, die optischen Mittel 26 (Figur 3), 26' (Figur 3) mit einem Durchlassfilter für die Wellenlänge $\lambda_1$ bzw. $\lambda_2$ auszurüsten. Der Bereich für die Werte der Wellenlängen $\lambda_1$ und $\lambda_2$ ist das sichtbare und das infrarote Spektrum der elektromagnetischen Wellen. Die Laserdioden 28 erzeugen z.B. ein monochromatisches Licht mit einer Wellenlänge $\lambda$, die je nach Bauart der Laserdiode 28 im Bereich von $\lambda$ = 430 nm (blau) bis ins Infrarote mit $\lambda \geq 1070$ nm liegt. Infrarotes Licht durchdringt beispielsweise eine schwarz eingefärbte Deckschicht des Laminats, so dass die eingeprägten Reliefstrukuren der visuell nicht sichtbaren optischen Markierungen 11 optisch abzutasten und die Informationen auszulesen sind.

In der Schweizer Anmeldung CH 2172/96 (WO 98/10324) sind Beugungsgitter beschrieben, die eine von der Polarisationsebene des einfallenden Lichts abhängige Asymmetrie aufweisen, die besonders ausgeprägt ist, wenn der Abstand d der Linien im Beugungsgitter kleiner als das Dreifache der von der Lichtquelle 1 (Figur 5) emittierten Wellenlänge $\lambda$ ist. Solche Beugungsgitter werden mit Vorteil für die optischen Markierungen 11 verwendet, die besonders hohen Anforderungen in Bezug auf die Fälschungssicherheit erfüllen müssen. Die optischen Markierungen 11 weisen als zusätzliches Sicherheitsmerkmal eine ausgeprägte Abhängigkeit der Intensität des gebeugten Lichts von der Polarisation des Lichts auf. Die optischen Markierungen 11 sind mit den gleichen Photodetektorpaaren A - A', B - B', C - C' und D - D auf das Vorhandensein des zusätzlichen Sicherheitsmerkmal überprüfbar, wenn die in der Figur 3 vor den aktiven Flächen 12, 12' der Photodetektoren 5, 5', 6. 6' angeordneten optischen Mittel 26, 26' entsprechend ausgerichtete Polarisationsfilter enthalten.

Die Vorrichtung mit den entsprechend ausgerichteten und vor wenigstens einem der Photodetektorpaare A - A', B - B', C - C' und D - D angeordneten Polarisationsfiltem weist den Vorteil auf, dass sie auf Volumenhologrammen (H. J. Caulfield: "Handbook of Optical Holography", Seiten 202ff, Academic Press, Inc., 1979, ISBN 0-12-165350-1) basierende Kopien des Sicherheitsmerkmals anhand ihres Polarisationsverhaltens als Fälschung zu erkennen vermag. Die Ausrichtung der Polarisationsfilter und die Wahl des mit den Polarisationsfiltern ausgerüsteten Photodetektorpaares hängt von den Parametern des in den optischen Markierungen 11 verwendeten polarisierenden Beugungsgitter ab.

Beispielsweise können die Polarisationsfilter vor den Photodetektoren 5, 5' gegenüber den Polarisationsfiltern vor den Photodetektoren 6; 6' um 90° gedreht angeordnet sein.

Eine andere Ausführung der Lichtquelle 1 weist den in der Figur 5 gezeigten schematischen Aufbau und ist zum Beleuchten der optischen Markierungen 1 mit linear polarisiertem Licht eingerichtet. Eine polarisierte Quelle 34 bzw. 35 umfasst die Laserdiode 24 und den Strahlkoppler 30. Die Strahlenquelle 27 ist zur Emission der in der Zeichnungsebene der Figur 5 linear polarisierten Strahlung 31 eingerichtet, während das Licht im Lichtbündel 29 nach der Umlenkung im Strahlteiler 30 parallel zur Strahlung 31 ausgerichtet und orthogonal zur Strahlung 31 linear polarisiert ist. Die Richtung der Polarisationsebene im Stahlenbündel 10 (Figur 1) ergibt sich aus der Herkunft des Lichts. Bei einer ersten Messung ist die Polarisationsebene im Stahlenbündel 10 ist die gleiche wie in der Strahlung 31, da die Strahlenquelle 27 eingeschaltet ist. Bei der folgenden Messung trägt das Lichtbündel 29 allein zur Beleuchtung der optischen Markierungen 11 bei, so dass im Stahlenbündel 10 die Polarisationsebene des Lichts gegenüber der Polarisationsebene der ersten Messung um 90° gedreht ist. Aus zwei aufeinander folgenden Messungen wird jeweils die Kennzahl Z für die entsprechende Polarisationsrichtung bestimmt. Eine positive Identifikation des Sicherheitselementes 4 erfordert, dass die Zahl Z aus der Menge der Werte KS stammen, die für die entsprechende Polarisationsrichtung vorbestimmt sind. Da in beiden Fällen die gleiche Wellenlänge $\lambda$ verwendet wird, werden für die Erkennung des Polarisationseinflusses keine zusätzlichen Photodetektorpaare benötigt.

Die Lichtquelle 1 kann anstelle der Strahlenquelle 27 eine um 90° versetzte, zweite linear polarisierte Quelle 35 enthalten. Die beiden Strahlkoppler 30 richten die beiden Lichtbündel 29 der Quellen 34, 35 parallel zur optischen Achse der Linse 32 aus.

Statt die Strahlungsquellen 27, 28 entsprechend ein- und auszuschalten, können in jedem Strahlengang vor dem Strahlkoppler 30 ein mechanischer oder elektromagnetischer Photoverschluss das unerwünschte Licht blockieren. Aufwendigere Ausführungen der Lichtquelle 1 (Figur 1) können die Lichtqualität sowohl bezüglich der Wellenlänge $\lambda$ als auch bezüglich der Polarisation und deren Richtung verändern. Die Anzahl der mit Photodetektorpaaren bestückten Beugungsebenen 100, 101, 102, 103 usw. und die Ausführung der Lichtquelle 1 richtet sich nach dem Umfang der zu unterscheidenden Sicherheitsmerkmale 4 (Figur 1).

Wie alle Vorrichtungen zum Erkennen von optischen Markierungen 11 sind auch die hier beschriebenen Vorrichtungen anfällig auf Fremdlicht. In der Figur 6 ist eine vorteilhafte Einrichtung zum Unterdrücken von Fremdlicht gezeigt, die auf Einsatz behindernde Abschirmungen verzichtet. Die Lichtquelle 1 ist mit einem Modulator 36 ausgerüstet, der mit einem digitalen oder analogen Modulationssignal die Lichtintensität im Strahlenbündel 10 mit der Frequenz f moduliert. Das an den optischen Markierungen 11 gebeugte Licht 15, 16 (Figur 3), 16' (Figur 3) ist ebenfalls mit der Frequenz f moduliert und wird vom Photodetektor 5, 5', 6 bzw. 6' auf der aktiven Fläche 12, 12' (Figur 3) seines optoelektronischen Wandlers 37 zusammen mit natürlichem oder künstlichem Streulicht empfangen und in ein elektrisches Signal umgewandelt. Jeder Photodetektor 5, 5', 6, 6' usw. umfasst weiter ein am Ausgang des Wandlers 37 angeschlossenes Hochpassfilter 38, einen mit dem Modulator 36 verbundenen, einen das Modulationssignal empfangenden Demodulator 39 und ein Tiefpassfilter 40. Das elektrische Signal des Wandlers 37 durchläuft zunächst das Hochpassfilter 38 mit einer unteren Grenzfrequenz $f_u$, wobei die vom Streulicht stammende Komponente ausgesiebt wird. Das verbleibende Signal nach dem Hochpassfilter 38 gelangt in den Demodulator 39, der das Modulationssignal entfernt. Das Tiefpassfilter 40 am Ausgang des Demodulators 39 weist eine obere Grenzfrequenz $f_O$ auf und glättet das durch das gebeugte Licht 15, 16, 16' erzeugte Nutzsignal, das als Ausgangssignal S1 bzw. S2 des Photodetektors 5, 5', 6 bzw. 6' abgegeben wird. In einer beispielhaften Ausführung sind bei einer Frequenz f= 18,4 kHz, die untere Grenzfrequenz $f_U$ = 2,7 kHz und die obere Grenzfrequenz $f_O$ =1,0 kHz gewählt worden.

Unabhängig, ob die Lichtquelle 1 moduliert ist oder nicht, kann die Strahlung der Lichtquelle 1 ein- und ausgeschaltet werden, beispielsweise zyklisch. Die Auswerteeinheit 17 überträgt entsprechende Signale über die Versorgungsleitung 20 an den Modulator 36 zum Steuern des Lichtstroms aus der Lichtquelle 1, wobei ein Messzyklus wenigstens eine Messphase und eine Ruhephase umfasst. Die Einschaltperiode der Messphase kann wie bei einem Blitzlicht sehr kurz bemessen sein, so dass von den in der Leseebene 25 (Figur 3) schnell transportierten Dokumenten 3, wie Banknoten oder Kreditpapiere, das Sicherheitsmerkmal 4 quasi - statisch abgelesen und identifiziert werden kann. Die Einschaltperiode eines Messzyklus kann beispielsweise von einem Dokument 3 mittels einer Lichtschranke ausgelöst worden.

Das Strahlenbündel 10 erzeugt an der rauhen Papieroberfläche des Dokuments 3, 24 (Figur 3) ein diffuses Streulicht. Diese Komponente des Streulichts weist eine Intensität in der Grössenordnung von einigen Prozenten der Intensität des Nutzsignals auf und kann durch die oben beschriebene Anordnung nicht entfernt werden. Mit Vorteil untersucht deshalb die Auswerteeinheit 17 vor der Verarbeitung gemäss der Figur 2 das vom Photodetektor 5, 6 bzw. 6' gelieferte Ausgangssignal S1 bzw. S2, ob es einen Grenzwert G übersteigt. Dieser Grenzwert G entspricht der Signalhöhe, die das Streulicht von einer mit dem Strahlenbündel 10 beleuchteten Papieroberfläche erzeugt. Die nur vom Streulicht erzeugten Ausgangssignate S1, S2 liegen unterhalb des Grenzwerts G und werden von Diskriminatoren 41 am Eingang der Auswerteeinheit 17 unterdrückt und nicht weiterverarbeitet.

In der Figur 7 ist ein halbdurchlässiger Spiegel 42 so im Strahlkegel 9 angeordnet, dass die optische Achse 7 (Figur 1) des Sammelelementes 2 (dargestellt mit einem Doppelpfeil) um beispielsweise 90° abgelenkt wird und eine zweite optische Achse 43 bildet. Das in die Beugungsordnungen 0 und ± 1 gebeugte Licht 44, 15 (Figur 1), 16 (Figur 1) trifft nun nicht mehr fokussiert auf die Fokalebene 8', sondern bildet das Lichtmuster als primäres Bild des Sicherheitselements 4 auf eine Fokusebene 45 mit der zweiten optischen Achse 43 als Senkrechte ab. Muss die Photodetektorenebene 46 weiter von der optischen Achse 7 angeordnet werden, ist ein Abbildungssystem 47 zwischen der Fokusebene 45 und der Photodetektorenebene 46 auf der zweiten optischen Achse 43 einzuschalten. Die beiden Brennpunkte des Abbildungssystems 47 liegen in den beiden Ebenen 45 und 46. Die Lichtquelle 1 beleuchtet mit dem Strahlenbündel 10 bei im wesentlichen senkrechtem Strahlungseinfall das Dokument 3 und das Sicherheitselement 4. Das in die nullte Beugungsordnung gebeugte und das vom Dokument 3 reflektierte Licht 44 durchstösst die Fokusebene 45 in einem Punkt vereinigt auf der zweiten optischen Achse 43 und wird mittels des Abbildungssystem 47 auf der Photodetektorenebene 46 erneut im Durchstosspunkt 48 der zweiten optischen Achse 43 abgebildet. Das in die ersten Beugungsordnungen gebeugte Licht 15, 16 wird relativ zum Durchstosspunkt 48 mit den entsprechenden Polarkoordinaten r, $\varphi$ und r, $\varphi$+180° auf die Photodetektorenebene 46 gelenkt. Wird das Dokument 3 mit der Drehachse parallel zum Strahlenbündel 10 um den Winkel $\vartheta$ gedreht, so dreht sich das Lichtmuster auf der Photodetektorenebene 46 ebenso um den Durchstosspunkt 48, d.h. alle Polarkoordinaten werden zu r, $\varphi + \vartheta$ und r, $\varphi$+180° + $\vartheta$.

Anstelle der diskreten Photodetektoren 5, 5', 6, 6' kann mit Vorteil in der Photodetektorenebene 45 ein Photodetektorenarray oder ein "Charge Coupled Device" verwendet werden, die z.B. aus Camcordern bekannt sind. Die Photodetektorenarrays sind schneller durch die Auswerteeinheit 17 auszulesen als die "Charge Coupled Devices". Der Erfindungsgedanke ist von der Art der Detektorentype unabhängig; beide werden im folgenden mit CCD 49 bezeichnet. Anstelle eines einzigen CCD 49 kann in der Figur 5 zwei oder mehrere CCD 49 um die Austrittspupille 33 bzw. um die optische Achse 7 (Figur 1) herum angeordnet werden.

Anhand der Figur 4 werden vorteilhafte Anwendungen der CCD 49 für das Lesegerät erklärt. Der CCD 49 besteht aus einem Photodetektoren - Karree mit über 500'000 Detektorzellen 50 mit den lichtempfindlichen Wandlern 37 (Figur 6) auf weniger als 1 cm$^2$. Im Beispiel der Tabelle 1 ist die Spatialfrequenz von 638 Linien/mm dem Abstand $R_1$ zugeordnet und die Spatialfrequenz von 986 Linien/mm bestimmt den Abstand $R_2$. Damit trotz einer möglichen Knitterung des Sicherheitselementes 4 das von den optischen Markierungen 11 kommende Licht sicher erkannt wird, ist ein Sicherheitsabstand von beispielsweise ± 50 Linien/mm zu den für die übrigen Beugungselementen des Sicherheitselementes 4 (Figur 1) verwendeten Spatialfrequenzen vorzusehen. Die bei den Markierungen 11 (Figur 3) eingesetzten Spatialfrequenzen werden in den übrigen Beugungselementen des Sicherheitselementes 4 nicht verwendet, so dass das von den Detektorzellen 50 in zwei Kreisringen K1, K2 (dargestellt als zwei schattierte Abschnitte eines Kreisrings) mit den mittleren Radien $R_1$ und $R_2$ empfangene Licht eindeutig von den Markierungen 11 stammt.

Das Lichtmuster ist in der Zeichnung der Figur 4 z.B. aus den beleuchteten Kreisflächen A bis D bzw. A' bis D' in den beiden Kreisringen K1, K2 und einem Fleck 51 im Durchstosspunkt 48 gebildet. Wird das Azimut des Sicherheitselementes 4 verändert, wandern die Kreise A bis D bzw. A' bis D' in vorbestimmter Art als festes Muster auf den beiden Kreisringen K1, K2 um den Durchstosspunkt 48. Beim Verkippen des Sicherheitselements 4 wandert der Fleck 51 und das Lichtmusters ist verzerrt. Durch eine mathematische Rücktransformation kann das Lichtmuster entzerrt und mit den erlaubten Referenzmustern verglichen oder korreliert werden. Die an das CCD 49 angeschlossene Auswerteeinheit 17 bestimmt zunächst die genauen Polarkoordinaten r, $\varphi$ bzw. r, $\varphi$+180° der in den Kreisen A bis D bzw. A' bis D' beleuchteten Detektorzellen 50, erzeugt ein Abbild des Lichtmustcrs im Speicher 22 (Figur 2) und vergleicht dieses Abbild mit vorbestimmten, im Speicher 22 abgelegten Referenzmustern. Die Referenzmuster umfassen wenigstens drei Paare von Intensitätsschwerpunkten des gebeugten Lichts, das beidseits der optischen Achse 7, 43 innerhalb der beiden Kreisringen K1, K2 zu erwarten ist. Alle Signale aus den Detektoren 50, die nicht auf den beiden Kreisringen K1, K2 liegen, stammen nicht von den Markierungen 11 und werden unterdrückt. Wegen des grossen Auflösungsvermögens der CCD 49 ist das Ausgangssignal X bzw. Y eines der beleuchteten Kreise A bis D bzw. A' bis D' aus den Signalen vieler benachbarten Detektorzellen 50 gebildet und die Koordinaten jedes Kreises wird aus dem Schwerpunkt der Intensität der Beleuchtung berechnet. Das Ausgangssignal X mit den Kreiskoordinaten (r, $\varphi$) und das Ausgangssignal Y mit den Kreiskoordinaten (r, $\varphi$ + 180°) bilden ein Signalpaar X, Y, dessen Signale das gebeugte Licht einer optischen Markierung 11 mit vorbestimmten Gitterparametern erzeugt hat. Entsprechend der Anzahl der optischen Markierungen 11 mit unterschiedlichen Gitterparametern gibt es solche Signalpaare X, Y, die entsprechend des in der Figur 2 gezeigten Verfahrens analysiert werden. Jedes Signalpaar X, Y entsprcht den beiden Ausgangssignalen S1, S2 des Photodetektorpaares 5, 6 bzw. 5', 6' und kann entsprechend bezeichnet werden, z.B. A - A'. Im Speicher 22 sind weitere Referenzwerte abgespeichert, die zur Gewinnung der Gruppe aller Ausgangssignale S1 und S2 benötigt werden, beispielsweise die Radien R1 und R2, die Breiten der Kreisringe K1, K2, die zu erkennenden Referenzmuster usw. Zum erfolgreichen Ablesen der Markierungen 11 müssen sich diese lediglich im Strahlenbündel 10 befinden; die azimutale Ausrichtung, der Abstand von der Leseebene 25 (Figur 3), und eine seitliche Verschiebung des Dokuments 3 (Figur 7) haben keinen Einfluss, während ein starkes Verkippen des Dokuments 3 korrigiert werden kann.

In der Figur 8 ist ein Lesegerät mit einer gegenüber der Normalen 54 auf die Leseebene 25 (Figur 3) um einen Winkel δ (vorzugsweise $0° \leq \delta \leq 45°$ ) geneigten Beleuchtungsachse 52 gezeigt. Der Vorteil dieser Anordnung liegt in der kompakten Bauweise. Das Licht aus der Lichtquelle 1 wird zum Strahlenkegel 9 aufgefächert und mittels eines optischen Eingangselementes 53 (Linse, Hohlspiegel, Hologramm, Beugungsgitter usw.) zum parallelen Strahlenbündel 10 umgeformt. Das reflektierte und das gebeugte Licht 44 und 15, 16 wird mit dem Sammelelement 2 zu seiner Fokalebene 45 transferiert, wo das Licht auf die Photodetektoren 5, 5', 6, 6' oder auf einen CCD 49 (Figur 7) fällt. Die optische Achse 7 des Sammelelementes 2 schliesst einen Winkel Φ zur Normalen 54 ein, wobei beispielsweise δ=Φ und die Beleuchtungsachse 52 in der gleichen Ebene wie die optische Achse 7 und die Normale 54 liegen kann. An sich können die Beleuchtungsachse 52 und die optische Achse 7 beliebige Richtungen im Halbraum oberhalb des Sicherheitselementes 2 haben, sofern sie sich in der Leseebene 25 (Figur 3) schneiden. Ebenso brauchen die Winkel δ, Φ nicht gleich zu sein (δ ≠ Φ). Die Wahl der Winkel δ, Φ ist weitgehend frei, muss jedoch mit den Gitterparametern der zu erkennenden optischen Markierungen 11 (Figur 6) und der Wellenlänge λ der Lichtquelle 1 abgestimmt werden. Die oben beschriebenen, einfachen Beugungsverhältnisse mit den Beugungsebenen 100 (Figur 1) usw. treffen in der Anordnung nach Figur 8 nicht mehr zu. Die Richtungen in der das Licht des Strahlenbündels 10 an einem vorgegebenen Gitter gebeugt wird, liegen im allgemeinen nicht mehr in einer Beugungsebene, sondern auf einem Kegelmantel, d.h. die Lichtmuster auf der Fokalebene 45 sind gegenüber dem senkrechten Lichteinfall verzerrt. Die Muster können gemäss den Ausführungen zu "Conical Diffraction" in "Electromagnetic Theory of Gratings" edited by R. Petit, Springer - Verlag; Berlin, 1980 für den Winkel δ berechnet und im Speicher 22 (Figur 2) als Referenzmuster abgelegt werden. Die Auswertung der Signale der Detektorzellen 50 des CCD 49 erfolgt wiederum durch einen Vergleich des Abbilds des Lichtmusters mit den Referenzmustern und durch die paarweise Zuordnung der Signale der Detektoren 50 (Figur 4) zu den Signalpaaren X, Y entsprechend den verschiedenen optischen Markierungen 11 und die Weiterverarbeitung aller Signalpaare X, Y wie oben beschrieben.

In den obigen Beispielen sind nur die Beugungsordnungen 0, ± 1 erwähnt worden. Ohne Abweichung vom erfinderischen Gedanken können auch andere Beugungsordnungen für die Analyse einbezogen werden, beispielsweise die ± 2-ten Beugungsordnungen oder die -1-te und die -2-te Beugungsordnung.

**Patentansprüche**

1. Vorrichtung zum gleichzeitigen maschinellen Erkennen beugungsoptischer Markierungen (11) eines Sicherheitselementes (4) auf einem in einer Leseebene (25) angeordneten Substrat (3; 24) mit einer Lichtquelle (1) zum Einstrahlen von Licht (10) von wenigstens einer vorbestimmten Wellenlänge λ auf die Leseebene (25), mit wenigstens drei Photodetektorpaaren (A - A'; a - a'; B - B'; b - b'; C - C'; c - c'; D - D'; d - d') aus jeweils zwei symmetrisch zur optischen Achse (7) angeordneten Photodetektoren (5; 5'; 6; 6'), die eine Beugungsebene (100; 101; 102; 103) festlegen und die zum Umwandeln der an den Markierungen (11) gebeugten bzw. am Substrat (3; 24) reflektierten Strahlung (15; 16; 16') in elektrische Signale S1, S2 proportional zur Intensität des auf die wirksame Fläche (12 bzw. 12') fallenden gebeugten Lichts (15; bzw. 16) eingerichtet sind, und mit einer Auswerteeinheit (17) zum Auswerten der Signale S1, S2,
**dadurch gekennzeichnet,**
**dass** sich eine Austrittpupille (33) der Lichtquelle (1) in einer von der Leseebene (25) abgewandten Fokalfläche (8') eines zwischen der Lichtquelle (1) und der Leseebene (25) angeordneten Sammelelements (2 bzw. 53) mit grosser Apertur befindet, das zum Erzeugen eines die Leseebene (25) beleuchtenden parallelen Strahlenbündels (10) aus einem aus der Austrittpupille (33) austretenden Strahlenkegel (9) dient,
**dass** sich zwischen den Markierungen (11) und den Photodetektoren (5; 5'; 6; 6') das Sammelelement (2) zum Fokussieren der an den Markierungen (11) gebeugten bzw. am Substrat (3; 24) reflektierten parallelen Strahlung (15; 16; 16') auf die in der Fokalfläche (8' bzw. 45 bzw. 46) des Sammelelements (2) angeordnete wirksame Fläche (12; 12') der Photodetektoren (5; 6 bzw. 5', 6') befindet, und
**dass** die Auswerteeinheit (17) zum Bilden der Ausgangssignale X, Y aus jedem Paar der elektrischen Signale S1, S2 und wenigstens zum Berechnen von relativen Differenzen RD = (X-Y):(X+Y) aus den Ausgangssignalen X, Y von jedem der Photodetektorpaare (A - A'; a - a'; B - B'; b - b'; C - C'; c - c'; D - D'; d - d') und zur Identifikation des Sicherheitselementes (4) mittels der berechneten relativen Differenzen RD eingerichtet ist, wobei die Ausgangssignale X, Y den elektrischen Signalen S1, S2 entsprechen.

2. Vorrichtung nach Anspruch 1, **dadurch gekennzeichnet, dass** wenigstens zwei Photodetektorpaare (A - A', B - B') mit einem ersten Abstand $R_1$ symmetrisch zur optischen Achse (7 bzw. 43) des Sammelelementes (2) vorhanden sind, deren Beugungsebenen (100; 101) sich in der optischen Achse (7 bzw. 43) unter einem Schnittwinkel β schneiden, und dass zwei weitere Photodetektorpaare (C - C'; D - D') mit einem zweiten Abstand $R_2$ symmetrisch zur optischen Achse (7 bzw. 43) angeordnet sind, deren Beugungsebenen (102; 103) sich in der optischen Achse (7 bzw. 43) unter einem Winkel β - 2γ schneiden und dass die vier Beugungsebenen (100; 101; 102; 103) eine gemeinsame, die Winkel β und β - 2γ halbierende Ebene besitzen, die auch die optische Achse (7 bzw. 43) enthält.

3.  Vorrichtung nach Anspruch 1 oder 2, **dadurch gekennzeichnet, dass** zwischen dem optischen Sammelelement (2) und der aktiven Fläche (12; 12') jedes Photodetektors (5; 5'; 6; 6') optische Elemente (26; 26') zum Fokussieren des gebeugten Lichts (15; 16; 16'; 44) auf die aktive Fläche (12; 12') und/oder zur Selektion der zum Empfang vorgesehenen Lichtqualität (Farbe, Polarisation) angeordnet sind.

4.  Vorrichtung zum gleichzeitigen maschinellen Erkennen beugnngsoptischer Markierungen (11) eines Sicherheitselementes (4) auf einem in einer Leseebene (25) angeordneten Substrat (3; 24) mit einer Lichtquelle (1) zum Einstrahlen von Licht (10) von wenigstens einer vorbestimmten Wellenlänge λ auf die Leseebene (25), mit Photodetektoren (5; 5'; 6; 6'; 50), die zum Umwandeln der an den Markierungen (11) gebeugten bzw. am Substrat (3; 24) reflektierten Strahlung (15; 16; 16') in elektrische Signale S1, S2 proportional zur Intensität der reflektierten Strahlung (15; 16; 16') eingerichtet sind, und mit einer Auswerteeinheit (17) zum Auswerten der Signale S1, S2 **dadurch gekennzeichnet,**

    **dass** sich eine Austrittpupille (33) der Lichtquelle (1) in einer von der Leseebene (25) abgewandten Fokalfläche (8') eines zwischen der Lichtquelle (1) und der Leseebene (25) angeordneten Sammelelements (2 bzw. 53) mit grosser Apertur befindet, das zum Erzeugen eines die Leseebene (25) beleuchtenden parallelen Strahlenbündels (10) aus einem aus der Austrittpupille (33) austretenden Strahlenkegel (9) dient,

    **dass** sich zwischen den Markierungen (11) und den Photodetektoren (5; 5'; 6; 6'; 50) das Sammelelement (2) befindet, das zum Fokussieren der an den Markierungen (11) gebeugten bzw. am Substrat (3; 24) reflektierten parallelen Strahlung (15; 16; 16') auf die in der Fokalfläche (8' bzw. 45 bzw. 46) des Sammelelements (2) angeordnete wirksame Fläche (12; 12') der Photodetektoren (5; 6; 5'; 6'; 50) eingerichtet ist,

    **dass** die Auswerteeinheit (17) zum Auslesen der elektrischen Signale S1, S2 der Photodetektoren (5; 5'; 6; 6'; 50) und zum Erkennen des bei der Beleuchtung der optischen Markierungen (11) in der Fokalfläche (8' bzw. 45 bzw. 46) entstehenden Lichtmusters eingerichtet ist, wobei die Auswertung

    a) durch einen Vergleich eines von den Photodetektoren (5; 5'; 6; 6'; 50) registrierten Lichtmusters mit in einem Speicher (22) abgelegten Referenzmustern mit wenigstens drei Paaren von Intensitätsschwerpunkten symmetrisch zur optischen Achse (7 bzw. 43) des Sammelelements (2),

    b) durch Zuordnung der Paare der Ausgangssignale X und Y der entsprechenden Photodetektoren (5;5';6;6'; 50) zu den Paaren der Intensitätsschwerpunkte im Referenzmuster wobei die Ausgangssignale X und Y den Signalen S1, S2 in den entsprechenden Intensitätsschwerpunkten im Lichtmuster der gebeugten Strahlung (15; 16; 16') entsprechen und wobei jedes Paar der Ausgangssignale X und Y von einer der optischen Markierungen (11) mit vorbestimmten Gitterparametern erzeugt ist, und

    c) durch eine Berechnung von relativen Differenzen RD = (X-Y):(X+Y) aus den Ausgangssignalen X, Y von jedem der Signalpaare (A - A'; a - a'; B - B'; b - b'; C - C'; c - c'; D - D'; d - d') erfolgt, und

    **dass** die Auswerteeinheit (17) zur Identifikation des Sicherheitselementes (4) mittels der berechneten relativen Differenzen RD eingerichtet ist.

5.  Vorrichtung nach Anspruch 4, **dadurch gekennzeichnet, dass** die Austrittspupille (33) der Lichtquelle (1) im Brennpunkt eines optischen Eingangselementes (53) auf einer Beleuchtungsachse (52) angeordnet ist, dass die Beleuchtungsachse (52) und das parallele Strahlenbündel (10) gegenüber einer Normalen (54) zur Leseebene (25) um einen Winkel -ϑ geneigt sind, dass die optische Achse (7 bzw. 43) des Sammelelements (2) mit der Normalen (54) einen Winkel +Φ einschliesst, dass die Beleuchtungsachse (52), die Normale (54) und die optische Achse (7 bzw. 43) in einer Ebene liegen, dass mit dem Sammelelement (2) eine Fokussierung der gebeugten und der reflektierten Strahlung (15, 16, 16', 44) auf die Pbotodetektorebene (8'; 45; 46) erfolgt.

6.  Vorrichtung nach Anspruch 4 oder 5, **dadurch gekennzeichnet, dass** die Photodetektoren (5; 5'; 6; 6'; 50) Detektoren (50) von wenigstens einer mit der Auswerteeinheit (17) verbundenen und symmetrisch zur optischen Achse (7 bzw. 43) angeordneten CCD - Einheit (49) sind.

7.  Vorrichtung nach einem der vorhergehenden Ansprüche, **dadurch gekennzeichnet, dass** die Auswerteeinheit (17) zum Steuern und Ueberwachen der Intensität und der Qualität des aus der Lichtquelle (1) emittierten Lichts eingerichtet ist.

8. Vorrichtung nach Anspruch 7, **dadurch gekennzeichnet, dass** die Lichtquelle (1) zur Emission von polychromen Licht mit den beiden mittleren Wellenlängen $\lambda_1$ und $\lambda_2$ eingerichtet ist.

9. Vorrichtung nach Anspruch 7, **dadurch gekennzeichnet, dass** die Lichtquelle (1) zurn Umschalten zwischen vorbestimmten Werten $\lambda_1$, $\lambda_2$ der Wellenlänge $\lambda$ des aus der Lichtquelle (1) emittierten Lichts eingerichtet ist.

10. Vorrichtung nach Anspruch 7 bis 9, **dadurch gekennzeichnet, dass** das Licht im Strahlenbündel (10) linear polarisiert ist und dass die Lichtquelle (1) zum zyklischen Umschalten zwischen zwei zueinander orthogonalen Richtungen der Polarisation des aus der Lichtquelle (1) emittierten Lichts eingerichtet ist.

11. Vorrichtung nach einem der Ansprüche 7 bis 10, **dadurch gekennzeichnet, dass** die Lichtquelle (1) einen Modulator (35) zum Steuern der Intensität des Lichtstroms aus der Lichtquelle (1) mit der Frequenz f umfasst.

12. Vorrichtung nach einem der vorhergehenden Anspruche, **dadurch gekennzeichnet, dass** die Auswerteeinheit (17) weiter umfasst

> a) eine Datenverarbeitungseinheit (21) mit einem Speicher (22) für alle Referenzwerte,
> b) eine Einrichtung zum Bilden eines Sununensignals X+Y aus allen Paaren der Ausgangssignale X und Y,
> c) Prüfeinrichtungen zum Vergleichen aller Summensignale X+Y mit der Menge der im Speicher (22) abgelegten Werte eines vorgegebenen erlaubten Bereichs S und eines unteren Grenzwertes U sowie aller relativen Differenzen RD mit im Speicher (22) abgelegten Werten eines oberen Grenzwertes L und von vorgegebenen erlaubten Bereichen N und P,
> d) eine Einheit zum Bilden eines das Sicherheitselement (4) repräsentierenden Ergebnisses Z aller Prüfeinrichtungen und
> e) eine Einheit zum Erkennen des Sicherheitselementes (4) durch Vergleichen des repräsentierenden Ergebnisses Z mit weiteren Referenzwerten KS aus dem Speicher (22).

## Claims

1. Apparatus for simultaneous mechanical recognition of optically diffractive markings (11) of a security element (4) on a substrate (3; 24) arranged in a reading plane (25) with the aid of a light source (1) for irradiating light (10) of at least one predetermined wavelength $\lambda$ onto the reading plane (25), having at least three photodetector pairs (A-A'; a-a'; B-B'; b-b'; C-C'; c-c'; D-D'; d-d') of in each case two photodetectors (5; 5'; 6; 6') which are arranged symmetrically relative to the optical axis (7), fix a diffraction plane (100; 101; 102; 103), and are set up to convert the radiation (15; 16; 16') diffracted at the markings (11) and/or reflected at the substrate (3; 24) into electric signals S1, S2 in a fashion proportional to the intensity of the diffracted light (15 or 16) falling onto the active surface (12 or 12'), and . having an evaluation unit (17) for evaluating the signals S1, S2, **characterized in that** an exit pupil (33) of the light source (1) is located in a focal surface (8'), averted from the reading plane (25), of a collecting element (2 or 53) which is arranged between the light source (1) and the reading plane (25), has a large aperture, and serves to generate a parallel beam (10) illuminating the reading plane (25) from a light cone (9) emerging from the exit pupil (33),
**in that** the collecting element (2) for focusing the parallel radiation (15; 16; 16') diffracted at the markings (11) and/ or reflected at the substrate (3; 24) onto the active surface (12; 12'), arranged in the focal surface (8' or 45 or 46) of the collecting element (2), of the photodetectors (5; 6 or 5', 6') is located between the markings (11) and the photodetectors (5; 5'; 6; 6'), and
**in that** the evaluation unit (17) is set up to form the output signals X, Y from each pair of the electric signals S1, S2, and at least to calculate relative differences RD = (X-Y):(X+Y) from the output signals X, Y of each of the photodetector pairs (A-A'; a-a'; B-B'; b-b'; C-C'; c-c'; D-D'; d-d') and to identify the security element (4) by means of the calculated relative differences RD, the output signals X, Y corresponding to the electric signals S1, S2.

2. Apparatus according to Claim 1, **characterized in that** there are present at least two photodetector pairs (A-A'; B-B') having a first spacing $R_1$ symmetrically relative to the optical axis (7 or 43) of the collecting element (2), whose diffraction planes (100; 101) intersect on the optical axis (7 or 43) at an intersection angle $\beta$, and **in that** two further photodetector pairs (C-C'; D-D') are arranged with a second spacing $R_2$ symmetrically relative to the optical axis (7 or 43), whose diffraction planes (102; 103) intersect on the optical axis (7 or 43) at an angle $\beta-2\gamma$,

and **in that** the four diffraction planes(100; 101; 102; 103) have a common plane which bisects the angles β and β-2γ and also contains the optical axis (7 or 43).

3. Apparatus according to Claim 1 or 2, **characterized in that** optical elements (26; 26') for focusing the diffracted light (15; 16; 16'; 44) onto the active surface (12; 12') and/or for selecting the light quality (colour, polarization) provided for reception are arranged between the optical collecting element (2) and the active surface (.12; 12') of each photodetector (5; 5'; 6; 6').

4. Apparatus for simultaneous mechanical recognition of optically diffractive markings (11) of a security element (4) on a substrate (3; 24) arranged.in a reading plane (25) with the aid of a light source (1) for irradiating light (10) of at least one predetermined wavelength λ onto the reading plane (25), having photodetectors (5; 5'; 6; 6'; 50) which are set up to convert the radiation (15; 16; 16') diffracted at the markings (11) and/or reflected at the substrate (3; 24) into electric signals S1, S2 in a fashion proportional to the intensity of the reflected radiation (15; 16; 16'), and having an evaluation unit (17) for evaluating the signals S1, S2, **characterized**

**in that** an exit pupil (33) of the light source (1) is located in a focal surface (8'), averted from the reading plane (25), of a collecting element (2 or 53) which is arranged between the light source (1) and the reading plane (25), has a large aperture, and serves to generate a parallel beam (10) illuminating the reading plane (25) from a light cone (9) emerging from the exit pupil (33),

**in that** located between the markings (11) and the photodetectors (5; 5'; 6; 6'; 50) is the collecting element (2) which is set up to focus the parallel radiation (15; 16; 16') diffracted at the markings (11) and/or reflected at the substrate (3; 24) onto the active surface (12; 12'), arranged in the focal surface (8' or 45 or 46) of the collecting element (2), of the photodetectors (5; 6; 5'; 6'; 50),

**in that** the evaluation unit (17) is set up to read out the electric signals S1, S2 of the photodetectors (5; 5'; 6; 6'; 50) and to recognize the light pattern produced on the focal surface (8' or 45 or 46) during illumination of the optical markings (11), the evaluation being performed

a) by comparing a light pattern recorded by the photodetectors (5; 5'; 6; 6'; 50) with reference patterns stored in a memory (22) and having at least three pairs of intensity centroids in a symmetrical fashion relative to the optical axis (7 or 43) of the collecting element (2),

b) by assigning the pairs of the output signals X and Y of the corresponding photodetectors (5; 5'; 6; 6'; 50) to the pairs of the intensity centroids in the reference pattern, the output signals X and Y corresponding to the signals S1, S2 in the corresponding intensity centroids in the light pattern of the diffracted radiation (15; 15; 16'), and each pair of the output signals X and Y being generated by one of the optical markings (11) with predetermined grating parameters, and

c) by calculating relative differences RD = (X-Y):(X+Y) from the output signals X, Y of each of the signal pairs (A-A'; a-a'; B-B'; b-b'; C-C'; c-c'; D-D'; d-d'), and

**in that** the evaluation unit (17) is set up to identify the security element (4) by means of the calculated relative differences RD.

5. Apparatus according to Claim 4, **characterized in that** the exit pupil (33) of the light source (1). is arranged at the focal point of an optical input element (53) on an illuminating axis (52), **in that** the illuminating axis (52) and the parallel beam (10) are inclined relative to a normal (54) to the reading plane (25) by an angle -θ, **in that** the optical axis (7 or 43) of the collecting element (2) encloses with the normal (54) an angle +Φ, **in that** the illuminating axis (52), the normal (54) and the optical axis (7 or 43) lie in a plane, and **in that** the collecting element (2) is used to focus the diffracted radiation and the reflected radiation (15, 16, 16', 44) onto the photodetector plane (8'; 45; 46).

6. Apparatus according to Claim 4 or 5, **characterized in that** the photodetectors (5; 5'; 6; 6'; 50) are detectors (50) of at least one CCD unit (49) connected to the evaluation unit (17) and arranged symmetrically relative to the optical axis (7 or 43).

7. Apparatus according to one of the preceding claims, **characterized in that** the evaluation unit (17) is set up to control and monitor the intensity and the quality of the light emitted from the light source (1).

8. Apparatus according to Claim 7, **characterized in that** the light source (1) is set up to emit polychromatic light with the two mean wavelengths $\lambda_1$ and $\lambda_2$.

9. Apparatus according to Claim 7, **characterized in that** the light source (1) is set up to switch over between pre-

determined values $\lambda_1$, $\lambda_2$ of the wavelength $\lambda$ of the light emitted from the light source (1).

10. Apparatus according to Claims 7 to 9, **characterized in that** the light in the beam (10) is linearly polarized, and **in that** the light source (1) is set up to switch over cyclically between two mutually orthogonal directions of the polarization of the light emitted from the light source (1).

11. Apparatus according to one of Claims 7 to 10, **characterized in that** the light source (1) includes a modulator (35) for controlling the luminous flux from the light source (1) with the frequency f.

12. Apparatus according to one of the preceding claims, **characterized in that** the evaluation unit (17) further includes

a) a data processing unit (21) with a memory (22) for all reference values,
b) a device for forming an aggregate signal X+Y from all the pairs of the output signals X and Y,
c) testing devices for comparing all the aggregate signals X+Y with the set of the values, stored in the memory (22), of a prescribed permitted range S and of a lower bound U as well as of all the relative differences RD with values, stored in the memory (22), of an upper bound L and of prescribed permitted ranges N and P,
d) a unit for forming a result Z, representing the security element (4), of all the testing devices, and
e) a unit for recognizing the security element (4) by comparing the representative result Z with further reference values KS from the memory (22).

## Revendications

1. Dispositif pour la reconnaissance mécanisée simultanée de marques optiques de diffraction (11) d'un élément de sécurité (4) sur un substrat (3, 24) disposé sur un plan de lecture (25) avec une source lumineuse (1) pour la projection de lumière (10) d'au moins une longueur d'onde prédéterminée $\lambda$ sur le plan de lecture (25), avec au moins trois paires de photodétecteurs (A - A' : a - a' ; B - B' : b - b' ; C - C' : c - c' ; D - D' : d - d') se composant respectivement de deux photodétecteurs (5 : 5' ; 6 : 6') disposés symétriquement à l'axe optique (7), qui définissent un plan de diffraction (100 ; 101 ; 102 ; 103) et qui sont équipés pour la conversion du rayonnement (15 ; 16 ; 16') diffracté sur les marques (11) ou réfléchi sur le substrat (3 ; 24) en signaux électriques S1 S2 proportionnels à l'intensité de la lumière diffractée (15 ou 16) tombant sur la surface active (12 ou 12') et avec une unité d'exploitation (17) pour exploiter les signaux S1, S2, **caractérisé en ce qu'**une pupille de sortie (33) de la source lumineuse (1) se trouve dans une surface focale (8') opposée au plan de lecture (25) d'un élément collecteur (2 ou 53) à grande ouverture disposé entre la source lumineuse (1) et le plan de lecture (25) et servant à la production d'un faisceau parallèle de rayons (10) éclairant le plan de lecture (25) à partir d'un cône de rayons (9) sortant de la pupille de sortie (33), **en ce qu'**entre les marques (11) et les photodétecteurs (5 : 5' ; 6 : 6') se trouve l'élément collecteur (2) pour la focalisation du rayonnement parallèle (15 ; 16 ; 16') diffracté sur les marques (11) ou réfléchi sur le substrat (3 ; 24) sur la surface active (12 ; 12') des photodétecteurs (5 ; 6 ou 5' ; 6') disposée sur la surface focale (8' ou 45 ou 46) de l'élément collecteur (2), et **en ce que** l'unité, d'exploitation (17) est équipée pour la formation des signaux de sortie X, Y à partir de chaque paire de signaux électriques S1 S2 et au moins pour le calcul de différences relatives RD = (X - Y) : (X + Y) à partir des signaux de sortie X, Y de chaque paire de photodétecteurs (A - A' : a - a' ; B - B' : b - b' ; C - C' : c - c' ; D - D' : d - d') ainsi que pour l'identification de l'élément de sécurité (4) à l'aide des différences relatives RD calculées, les signaux de sortie X, Y correspondant aux signaux électriques S1, S2.

2. Dispositif selon la revendication 1, **caractérisé en ce qu'**il existe au moins deux paires de photodétecteurs (A - A' ; B - B') avec un premier espacement $R_1$ symétrique à l'axe optique (7 ou 43) de l'élément collecteur (2), dont les plans de diffraction (100 ; 101) se coupent dans l'axe optique (7 ou 43) avec un angle de coupe $\beta$, **en ce qu'**il existe deux autres paires de photodétecteurs (C - C' ; D - D') avec un deuxième espacement $R_2$ symétrique à l'axe optique (7 ou 43), dont les plans de diffraction (102 ; 103) se coupent dans l'axe optique (7 ou 43) avec un angle de coupe $\beta$ - 2 $\lambda$ et **en ce que** les quatre plans de diffraction (100 ; 101 : 102 ; 103) possèdent un plan commun, qui divise en deux les angles $\beta$ et $\beta$ - 2 $\lambda$ et qui comprend aussi l'axe optique (7 ou 43).

3. Dispositif selon la revendication 1 ou 2, **caractérisé en ce qu'**entre l'élément collecteur optique (2) et la surface active (12 ; 12') de chaque photodétecteur (5 ; 5' : 6 ; 6') sont disposés des éléments optiques (26 ; 26') pour la focalisation de la lumière diffractée (15 ; 16 ; 16' ; 44) sur la surface active (12 ; 12') et/ou pour la sélection de la qualité de lumière prévue pour la réception (couleur, polarisation).

4. Dispositif pour la reconnaissance mécanisée simultanée de marques optiques de diffraction (11) d'un élément de sécurité (4) sur un substrat (3, 24) disposé sur un plan de lecture (25) avec une source lumineuse (1) pour la projection de lumière (10) d'au moins une longueur d'onde prédéterminée λ sur le plan de lecture (25), avec des photodétecteurs (5:5' ; 6 : 6' ; 50), qui sont équipés pour la conversion du rayonnement (15 ; 16' ; 16') diffracté sur les marques (11) ou réfléchi sur le substrat (3 ; 24) en signaux électriques S1, S2 proportionnels à l'intensité du rayonnement réfléchi (15 ; 16 ; 16') et avec une unité d'exploitation (17) pour exploiter les signaux S1, S2, **caractérisé en ce qu'**une pupille de sortie (33) de la source lumineuse (1) se trouve sur une surface focale (8') opposée au plan de lecture (25) d'un élément collecteur (2 ou 53) à grande ouverture disposé entre la source lumineuse (1) et le plan de lecture (25) et servant à la production d'un faisceau parallèle de rayons (10) éclairant le plan de lecture (25) à partir d'un cône de rayons (9) sortant dé la pupille de sortie (33), **en ce qu'**entre les marques (11) et les photodétecteurs (5 : 5' ; 6 : 6' ; 50) se trouve l'élément collecteur (2), qui est équipé pour la focalisation du rayonnement parallèle (15 ; 16 ; 16') diffracté sur les marques (11) ou réfléchi sur le substrat (3 ; 24) sur la surface active (12 ; 12') des photodétecteurs (5 ; 6 ; 5' ; 6' ; 50) disposée dans la surface focale (8' ou 45 ou 46) de l'élément collecteur (2), **en ce que** l'unité d'exploitation (17) est équipée pour la lecture du signal électrique S1, S2 des photodétecteurs (5 : 5' ; 6 : 6' ; 50) et pour la reconnaissance de l'échantillon de lumière apparaissant dans la surface focale (8' ou 45 ou 46) lors de l'éclairage des marques optiques (11), l'exploitation ayant lieu

a) à l'aide d'une comparaison d'un échantillon de lumière enregistré par les photodétecteurs (5 ; ; 5' : 6 ; 6' : 50) avec un échantillon de référence conservé dans une mémoire (22) et comprenant au moins trois paires de points forts d'intensité symétriques à l'axe optique (7 ou 43) de l'élément collecteur (2),

b) par une attribution des paires des signaux de sortie X et Y des photodétecteurs (5 ; 5' : 6 ; 6' : 50) correspondants aux paires des points forts d'intensité dans l'échantillon de référence, les signaux de sortie X et Y étant en coïncidence avec les signaux S1 et S2 dans les points forts d'intensités correspondants dans l'échantillon de lumière du rayonnement diffracté (15 ; 16 ; 16') et chaque paire de signaux de sortie X et Y étant produite par une des marques optiques 11 avec des paramètres de grille prédéterminés et

c) par un calcul de différences relatives RD = (X - Y) : (X + Y) à partir des signaux de sortie X, Y de chacune des paires de signaux (A - A' : a - a' ; B - B' : b - b' ; C - C' : c - c' ; D - D' : d - d'), et **en ce que** l'unité d'exploitation (17) est équipée pour l'identification de l'élément de sécurité (4) à l'aide des différences relatives calculées RD.

5. Dispositif selon la revendication 4, **caractérisé en ce que** la pupille de sortie (33) de la source de lumière (1) est disposée au point focal d'un élément d'entrée optique (53) sur un axe d'éclairage (52), **en ce que** l'axe d'éclairage (52) et le faisceau parallèle de rayons (10) est incliné de la valeur d'un angle - δ par rapport à la normale (54) du plan de lecture, **en ce que** l'axe optique (7 ou 43) de l'élément collecteur (2) forme avec la normale (54) un angle + Φ, **en ce que** l'axe d'éclairage (52), la normale (54) et l'axe optique (7 ou 43) se trouvent sur un même plan et **en ce qu'**avec l'élément collecteur (2) a lieu une focalisation du rayonnement diffracté et réfléchi (15 ; 16 ; 16' ; 44) sur le plan des photodétecteurs (8' ; 45 ; 46).

6. Dispositif selon la revendication 4 ou 5, **caractérisé en ce que** les photodétecteurs (5 : 5' ; 6 : 6' ; 50) sont des détecteurs (50) d'au moins une unité CCD (49) reliée avec l'unité d'exploitation (17) et disposée symétriquement à l'axe optique (7 ou 43).

7. Dispositif selon l'une des revendications précédentes, **caractérisé en ce que** l'unité d'exploitation (17) est équipée pour la commande et la surveillance de l'intensité et de la qualité de la lumière émise par la source de lumière (1).

8. Dispositif selon la revendication 7, **caractérisé en ce que** la source de lumière (1) est équipée pour l'émission de lumière polychrome ayant les deux longueurs d'ondes moyennes $\lambda_1$ et $\lambda_2$.

9. Dispositif selon la revendication 7, **caractérisé en ce que** la source de lumière (1) est équipée pour la commutation entre des valeurs prédéterminées $\lambda_1$ et $\lambda_2$ de la longueur d'onde λ de la lumière émise par la source de lumière (1).

10. Dispositif selon les revendications 7 à 9, **caractérisé en ce que** la lumière dans le faisceau de rayons (10) fait l'objet d'une polarisation linéaire et **en ce que** la source de lumière (1) est équipée pour une commutation cyclique entre deux directions orthogonales l'une par rapport à l'autre de la polarisation de la lumière émise par la source de lumière (1)

11. Dispositif selon l'une des revendications 7 à 10, **caractérisé en ce que** la source de lumière (1) comprend un modulateur (35) pour commander l'intensité du flux de lumière provenant de la sourde de lumière (1) avec la fréquence f.

**12.** Dispositif selon l'une des revendications précédentes, **caractérisé en ce que** l'unité d'exploitation (17) - comprend en outre :

a) une unité de traitement de données (21) avec une mémoire (22) pour toutes les valeurs de référence.

b) un dispositif pour former un signal totalisateur X + Y à partir de toutes les paires de signaux de sortie X et Y.

c) des dispositifs de contrôle pour la comparaison de tous les signaux totalisateurs X + Y avec le volume des valeurs se trouvant dans la mémoire (22) d'une zone S prédéterminée et autorisée et d'une valeur limite inférieure U ainsi que de toutes les différences relatives RD avec des éléments déposés dans la mémoire (22) d'une valeur limite supérieure L et de zones prédéterminées autorisées N et P

d) une unité pour former un résultat Z de tous les dispositifs de contrôle représentant l'élément de sécurité (4) et

e) une unité pour reconnaître l'élément de sécurité (4) à l'aide d'une comparaison du résultat représentatif Z avec d'autres valeurs de référence KS provenant de la mémoire (22).

# Fig. 1

# Fig. 2

Fig. 3

Fig. 4

Fig. 5

Fig. 6

Fig. 7

Fig. 8